# EUROPÄISCHE PATENTANMELDUNG

(11) **EP 1 707 348 A1**
(43) Veröffentlichungstag der Anmeldung: **04.10.2006**
(21) Anmeldenummer: 05007255.2
(22) Anmeldetag: 02.04.2005
(51) Int. Cl.: B32B 3/24, B65D 77/22, B65D 33/01, B29C 59/00

(54) **Materialbahn für Verpackungen**

(71) Anmelder: Südpack Verpackungen GmbH & Co., 88416 Ochsenhausen (DE)
(72) Erfinder: Remmele, Alfred, 88416 Ochsenhausen (DE); Limbeck, Roland, 88400 Biberach (DE)
(74) Vertreter: Engelhardt, Guido

(57) **Zusammenfassung**

Bei einer Materialbahn, die aus mindestens zwei übereinander angeordneten Folien (14,15) zusammengesetzt ist, sind in die die Außenseite eines Verpackungsbehälters (11) bildende Folie (15) schlitzartige Freisparungen (17) eingearbeitet, die zueinander beabstandet sind, und die die äußere Folie (15) tragende Folie (14) aus einem etwa achssenkrecht zu den Freisparungen (17) elastisch verformbaren Werkstoff hergestellt.

Durch diese Ausgestaltung ist es möglich, die durch die Folien (14,15) gebildete Materialbahn bei Verpackungen für Lebensmittel zu verwenden, in denen gesteuert ein sich ergebender Überdruck abzubauen ist. Die Freisparungen (17) vergrößern sich nähmlich in Abhängigkeit von dem Innendruck in der Verpackung (11) und in der inneren Folie (14) bilden sich porenartige Öffnungen aus, so dass sich der Überdruck selbsttätig abbauen kann. Ein Aufplatzen des Verpackungsbehälters (11) beim Pasteurisieren eines eingelagerten Lebensmittels (20) ist demnach nahezu ausgeschlossen.

## Beschreibung

Die Erfindung bezieht sich auf eine Materialbahn , die aus mindestens zwei übereinander angeordneten Folien zusammengesetzt ist und aus der zum Beispiel Deckelfolien für Verpackungsbehälter oder Verpackungsbeutel herstellbar sind.

Durch die EP 1 359 097 A1 ist eine Verpackung für Lebensmittel, die einem Pasteurisationsvorgang unterzogen werden sollen, bekannt. Die das Lebensmittel luftdicht umschließende Verpackung ist hierbei mit einem Ventil versehen, um den durch das Erhitzen des Lebensmittels entstehenden Überdruck in der Verpackung zumindest teilweise an die Umgebung abgeben zu können.

Derartige Verpackungen haben sich zwar seit geraumer Zeit bewährt, das Einsetzen der gesondert hergestellten Ventile in die Verpackung ist aber mit einem erheblichen Arbeitsaufwand verbunden. Außerdem bestehen die Ventile aus mehreren Bauteilen, z.B. einer durch Stege gehaltenen Membran, zwischen der und dem Dichtungskörper ein Dichtungsöl aufgebracht ist, so dass Beschädigungen beim Transport der Verpackungen und Störungen beim Pasteurisationsvorgang nahezu unvermeidbar sind.

Aufgabe der Erfindung ist es daher, eine aus mindestens zwei übereinander angeordneten Folien bestehende Materialbahn zu schaffen, die zur Herstellung von Verpackungen, in denen eingelagerte Lebensmittel einem Pasteurisationsvorgang auszusetzen sind, verwendet werden kann, ohne dass es dazu gesonderter Überdruckventile bedarf. Die Herstellung der Materialbahn soll auf einfache und sehr wirtschaftliche Weise möglich sein, dennoch soll ein beim Erhitzen des eingelagerten Lebensmittels entstehender Überdruck gesteuert abgebaut werden können und die Verpackung soll sich nach dem Abbau des Überdruckes selbsttätig wiederum nahezu luftdicht verschließen.

Gemäß der Erfindung ist die aus mindestens zwei übereinander angeordneten Folien zusammengesetzte Materialbahn, mittels der dies zu erreichen ist, dadurch gekennzeichnet, dass in die die Außenseite eines Verpackungsbehälters oder eines Verpackungsbeutels bildende Folie eine oder mehrere schlitzartige Freisparungen eingearbeitet sind, die in Längs- und/oder Querrichtung des Verpackungsbehälters oder des Verpackungsbeutels mit seitlichem Abstand zueinander angeordnet sind, und dass die die mit Freisparungen versehene Folie tragende Folie oder Folien aus einem zumindest etwa achssenkrecht zu den schlitzartigen Freisparungen elastisch verformbaren Werkstoff hergestellt sind.

Zweckmäßig ist es hierbei, die mit den Freisparungen versehene Folie aus einem biaxial orientierten Werkstoff herzustellen, es ist aber auch möglich, wenn diese Folie aus einem monoaxial orientierten Werkstoff besteht, der in Achsrichtung der Freisparung elastisch verformbar ist.

Nach einer andersartigen Ausgestaltung kann die Materialbahn aber auch aus einer coextrudierten Mehrschichtfolie hergestellt werden, in deren die Außenseite eines Verpackungsbehälters oder eines Beutels bildende Schicht die Freisparungen eingearbeitet sind.

Sehr vorteilhaft ist es, die schlitzartigen Freisparungen mittels eines Laserstrahls in die äußere Folie bzw. Schicht der Materialbahn vorzugsweise bei deren Herstellung einzuarbeiten.

Die aus biaxial oder monoaxial orientiertem oder coextrudiertem Material bestehende Folie der Materialbahn kann aus Polyester, Polyamid, Polypropylen oder Polyamid-Ethylenvinylakohol-Polyamid oder einem anderen Folienverbund mit einer eingebetteten Schicht aus Ethylenvinylalkohol mit einer Schichtstärke von etwa 10 - 40 µm bestehen; die elastisch verformbare Folie der Materialbahn kann aus coextrudiertem Polypropylen oder Polyethylen mit einer Schichtstärke von etwa 30 - 100 µm bestehen.

Wird eine Materialbahn gemäß der Erfindung ausgebildet, so ist es möglich, diese ganz oder teilweise bei Verpackungen insbesondere für Lebensmittel zu verwenden, in denen gesteuert ein sich ergebender Überdruck abzubauen ist. Dadurch, dass nämlich in der äußeren Folie eine oder mehrere Freisparungen eingearbeitet werden, die sich in Abhängigkeit von dem Innendruck der Verpackung vergrößern, und die diese tragende Folie aus einem elastisch verformbaren Werkstoff besteht, in der sich beim Ausdehnen porenartige Öffnungen ausbilden, kann sich selbsttätig der Überdruck in der Verpackung abbauen. Durch die Wahl der Werkstoffe, die Anordnung und/oder der Länge und/oder der Gestaltung der Freisparungen können die Grenzen des Überdrucks abgestimmt, z.B. auf den jeweiligen Pasteurisationsvorgang und das eingelagerte Lebensmittel eingestellt werden.

Da, um dies zu ermöglichen, keine gesonderten Bauteile erforderlich sind, die Funktionsweise sich vielmehr aus den gewählten Materialien ergibt, ist eine äußerst hohe Betriebssicherheit gewährleistet. Des Weiteren ist die Herstellung der Materialbahn mit sehr geringem Aufwand zu bewerkstelligen. Die Freisparungen können nämlich bei der Fertigung der Materialbahn unmittelbar in deren äußere Schicht, z.B. mittels eines Laserstrahles, eingearbeitet werden, so dass ein zusätzlicher Arbeitsgang nicht erforderlich ist. Mit Hilfe der vorschlagsgemäß ausgebildeten Materialbahn lassen sich somit kostengünstig Verpackungsbehälter und -beutel insbesondere für einen Pasteurisationsvorgang zu unterziehenden Lebensmittel herstellen, die bei hoher Betriebssicherheit einen Druckabbau ermöglichen und demnach nicht aufplatzen, wobei die Barriereeigenschaften der Materialbahn durch die schlitzartigen Freisparungen nicht wesentlich beeinträchtigt werden.

In der Zeichnung sind eine gemäß der Erfindung ausgebildete Materialbahn und deren Verwendung bei Verpackungsbehältern dargestellt, die nachfolgend im Einzelnen erläutert sind. Hierbei zeigt:
- Figur 1: eine mit schlitzartigen Freisparungen versehene Materialbahn, in Draufsicht,
- Figur 2: die Materialbahn nach Figur 1 in einem Schnitt nach der Linie II - II, in vergrößerter Wiedergabe,
- Figur 3: einen mit einer gemäß Figur 1 ausgebildeten Materialbahn verschlossenen Verpackungsbehälter, in einem Schnitt,
- Figur 4: den Verpackungsbehälter nach Figur 3, im Überdruckzustand,
- Figur 5: eine Draufsicht auf die Deckelfolie des Verpackungsbehälters nach Figur 4, in einer vergrößerten Darstellung, und
- Figur 6: einen aus der Materialbahn gemäß Figur 1 hergestellten Verpackungsbeutel.

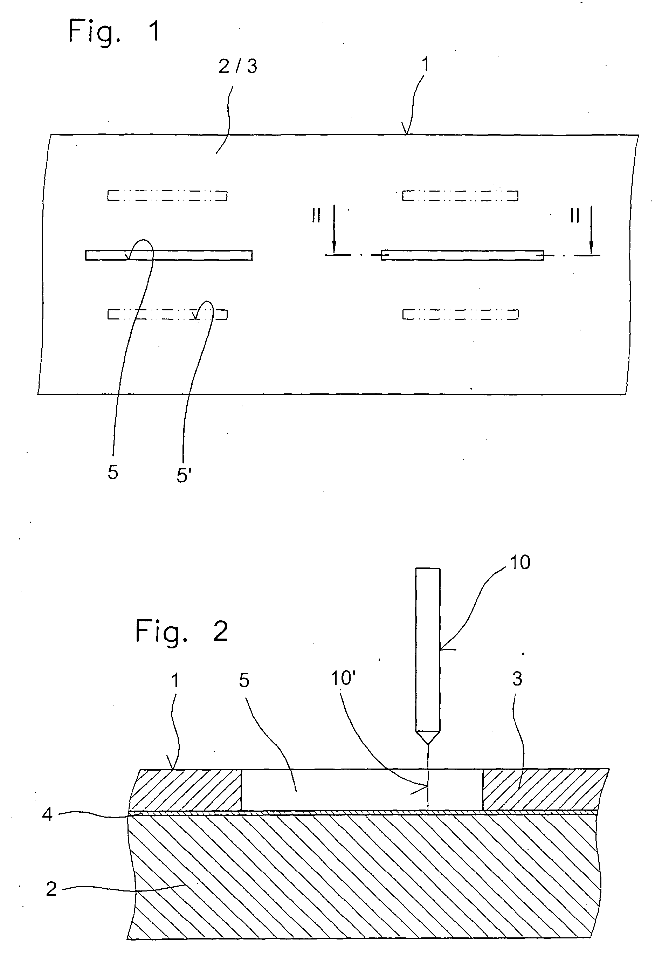

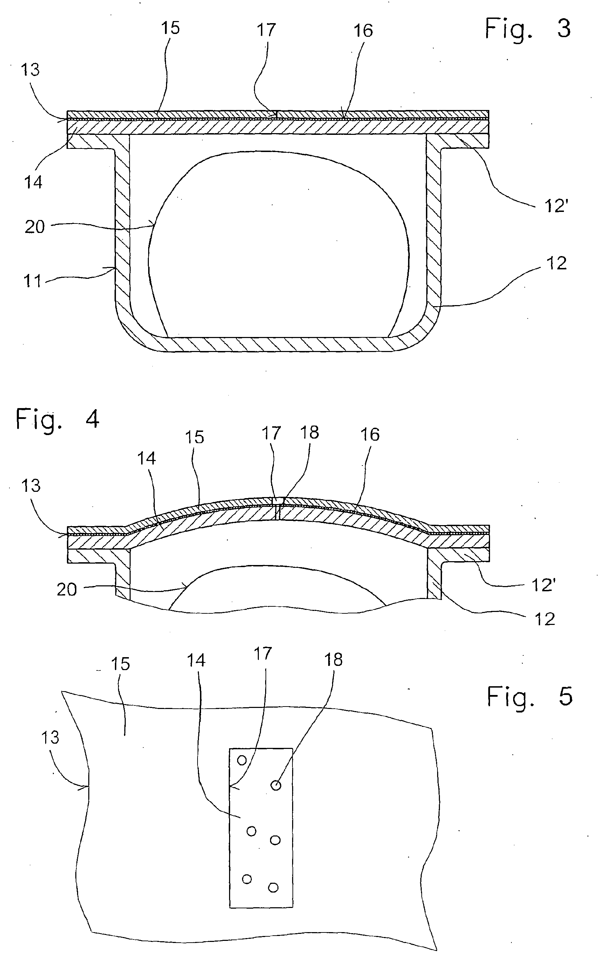

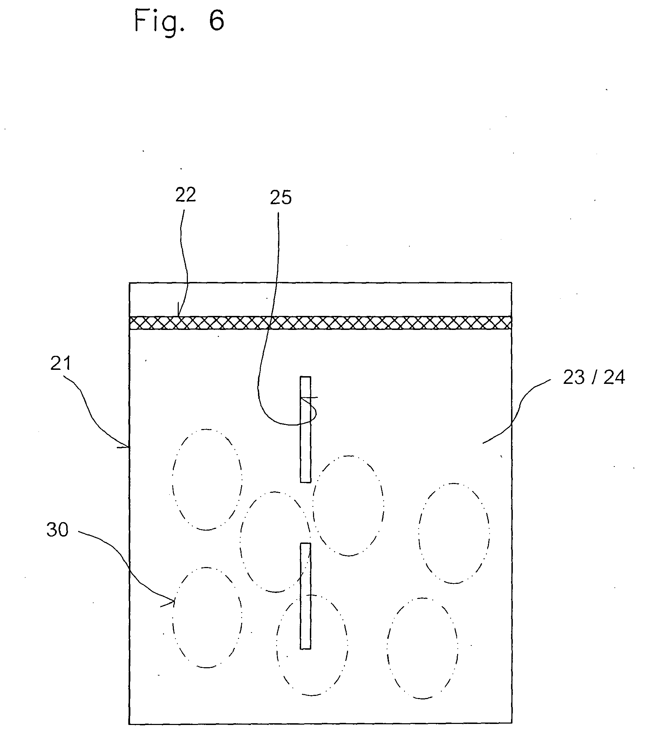

Die in den Figuren 1 und 2 dargestellte und mit 1 bezeichnete Materialbahn ist z.B. gemäß Figur 3 als auf einen Verpackungsbehälter 11 aufsiegelbare Deckelfolie 13 oder nach Figur 6 als Verpackungsbeutel 21 verwendbar und besteht aus einer inneren Folie 2 und einer mit dieser über eine Klebstoffschicht 4 verbundenen äußeren Folie 3. Die innere Folie 2 ist hierbei aus einem elastisch verformbaren Werkstoff hergestellt, die äußere Folie 3 dagegen bei dem gezeigten Ausführungsbeispiel aus einem biaxialen Material.

Des Weiteren sind in die äußere Folie 3 schlitzartige hintereinander mit Abstand angeordnete Freisparungen 5 eingearbeitet, es ist gemäß der strichpunktierten Darstellung aber auch möglich, zwei oder mehrere Reihen schlitzartiger Freisparungen 5' in der äußeren Folie 3 nebeneinander vorzusehen.

Die schlitzartigen Freisparungen 5 können, wie dies in Figur 2 gezeigt ist, bei der Herstellung der Materialbahn 1 mit Hilfe eines über einen Laserkopf 10 zugeführten Laserstrahls 10' in die äußere Folie 3 eingearbeitet werden. Das dabei abgetragene Material der äußeren Folie 3 wird mit Hilfe eines nicht dargestellten Gebläses abgesaugt.

Gemäß Figur 3 ist auf dem umlaufenden Rand 12' des als Schale 12 ausgebildeten Verpackungsbehälters 11 eine Deckelfolie 13 aufgesiegelt, die aus der Materialbahn 1 herausgearbeitet sein kann und aus einer inneren Folie 14 und einer äußeren Folie 15 besteht, die mittels einer Klebstoffschicht 16 fest miteinander verbunden sind. Die äußere Folie 14 weist wiederum schlitzartige Freisparungen 17 auf.

Wird durch einen Pasteurisationsvorgang das in dem Verpackungsbehälter 11 eingelagerte Lebensmittel 20 erhitzt, erhöht sich der Innendruck in dem Verpackungsbehälter 11, und die Deckelfolie 13 wird, wie dies in Figur 4 gezeigt ist, ausgedehnt. Dabei öffnen sich die in die äußere Folie 15 eingearbeiteten schlitzartigen Freisparungen 17, da die Folie 15 nicht dehnbar ausgelegt ist. In der inneren elastisch verformbaren Folie 14 bilden sich dagegen mehrere porenartige Durchgangsöffnungen 18 aus, über die im Bereich der Freisparungen 17 der in dem Verpackungsbehälter 12 herrschende Überdruck abgebaut wird, in dem Luft ausströmen kann. Sobald jedoch der Druck in dem Verpackungsbehälter 11 abgesenkt ist, wird die Deckelfolie 13 selbsttätig aufgrund der Elastizität der inneren Folie 14 in den Ausgangszustand zurückgeführt, so dass der Verpackungsbehälter 11 wiederum nahezu luftdicht verschlossen ist.

In gleicher Weise ist der aus einer Schlauchfolie hergestellte und durch eine Siegelnaht 22 verschlossene Verpackungsbeutel 21 gemäß Figur 6 wirksam. Die innere Folie 23 ist aus einem elastisch verformbaren Werkstoff hergestellt, die auf dieser angeordnete Folie 24 ist dagegen wiederum biaxial ausgelegt und mit schlitzartigen Freisparungen 25 versehen. Das in dem Verpackungsbeutel 21 eingelagerte Lebensmittel 30 kann somit gegart werden, ohne dass dabei zu befürchten ist, dass durch einen zu hohen Überdruck der Verpackungsbeutel 21 aufreißt.

## Patentansprüche

1. Materialbahn (1), die aus mindestens zwei übereinander angeordneten Folien (2, 3) zusammengesetzt ist und aus der zum Beispiel Deckelfolien (13) für Verpackungsbehälter (11) oder Verpackungsbeutel (21) herstellbar sind,
**dadurch gekennzeichnet,**
**dass** in die die Außenseite eines Verpackungsbehälters (11) oder eines Verpackungsbeutels (21) bildende Folie (3, 15, 24) eine oder mehrere schlitzartige Freisparungen (5, 5', 17, 25) eingearbeitet sind, die in Längs- und/oder Querrichtung des Verpackungsbehälters (11) oder des Verpackungsbeutels (21) mit seitlichem Abstand zueinander angeordnet sind, und dass die die mit Freisparungen (5, 5', 17, 25) versehene Folie (3, 15) tragende Folie (2, 14, 23) oder Folien aus einem zumindest etwa achssenkrecht zu den schlitzartigen Freisparungen (5, 5', 17, 25) elastisch verformbaren Werkstoff hergestellt sind.

2. Materialbahn nach Anspruch 1,
**dadurch gekennzeichnet,**
**dass** die mit den Freisparungen (5, 5', 17, 25) versehene Folie (3, 15, 24) aus einem biaxial orientierten Werkstoff besteht.

3. Materialbahn nach Anspruch 1,
**dadurch gekennzeichnet,**
**dass** die mit den Freisparren (5, 5', 7, 17, 25) versehene Folie (3, 15, 24) aus einem monoaxial orientierten Werkstoff besteht, der in Achsrichtung der Freisparung (5, 5', 17, 25) elastisch verformbar ist.

4. Materialbahn nach Anspruch 1,
**dadurch gekennzeichnet,**
**dass** die Materialbahn (1) aus einer coextrudierten Mehrschichtfolie besteht, in deren die Außenseite eines Verpackungsbehälters (11) oder eines Beutels (21) bildende Schicht die Freisparungen (5, 5', 17, 25) eingearbeitet sind.

5. Materialbahn nach einem oder mehreren
der Ansprüche 1 bis 4,
**dadurch gekennzeichnet,**
**dass** die schlitzartigen Freisparungen (5, 5', 17, 25) mittels eines Laserstrahls (10') in die äußere Folie (3) bzw. Schicht der Materialbahn (1) bei deren Herstellung eingearbeitet sind.

6. Materialbahn nach einem oder mehreren
der Ansprüche 1 bis 4,
**dadurch** ge kennzeichnet,
dass die aus biaxial, monoaxial orientiertem oder coextrudiertem Material bestehende Folie (3, 15, 24) der Materialbahn (1) aus Polyester, Polyamid, Polypropylen oder Polyamid-Ethylvinylalkohol-Polyamid oder einem anderen Folienverbund mit einer eingebetteten Schicht aus Ethylenvinylalkohol mit einer Schichtstärke von etwa 10 - 40 µm besteht.

7. Materialbahn nach einem oder mehren
der Ansprüche 1 bis 4,
dass die elastisch verformbare Folie (2, 14, 23) der Materialbahn (1) aus coextrudiertem Polypropylen oder Polyethylen mit einer Schichtstärke von etwa 30 - 100 µm besteht.
